# EUROPEAN PATENT APPLICATION

(11) **EP 2 067 938 A2**
(43) Date of publication of application: **10.06.2009**
(21) Application number: 07023246.7
(22) Date of filing: 30.11.2007
(51) Int. Cl.: F01K 23/06

(54) **Gasification plant with combined engine and steam turbine**

(71) Applicant: Babcock & Wilcox Vølund A/S, 6705 Esbjerg Ø (DK)
(72) Inventor: Jørgensen, Kenneth, 6710 Esbjerg V. (DK); Heeb, Robert, 6710 Esbjerg V. (DK)
(74) Representative: Tonnesen, Bo

(57) **Abstract**

In a gasification plant comprising
- a gasifier (1) delivering product gas to
- a gas engine (5) driving
- an electrical generator (6)
- a combustion chamber (19) delivering heat to
- a boiler (15) providing steam for driving
- a steam turbine (17) driving an electrical generator (18),
the exhaust gas from the gas engine (5) is delivered to the combustion chamber (19) for use as combustion air, whereby the contents of CO and NOₓ is reduced and the heat in the exhaust gas is utilized in the boiler (15), thus increasing the thermal efficiency of the plant.

## Description

### TECHNICAL FIELD

The present invention relates to a gasification plant of the kind set forth in the preamble of claim 1.

### BACKGROUND ART

In gasification plants of this kind, it is known to provide a gasifier delivering gas to a gas engine driving an electrical generator. A gasifier of this kind is e.g. known from FR-2,844,804, in which the produced gas from the gasifier is used as fuel for a gas engine for producing electrical power and as fuel for a burner for heating purposes.

### DISCLOSURE OF THE INVENTION

It is the object of the present invention to provide a gasification plant of the kind referred to above, with which it is possible to reduce the amounts of CO and NOₓ discharged to the environment, and which provides a high electrical and thermal efficiency, and this object is achieved with a gasification plant of said kind, which according to the present invention also comprises the features set forth in the characterizing clause of claim 1. With this arrangement, the exhaust gas from the gas engine being used as combustion air will have its contents of CO and NOₓ reduced in the combustion chamber and the heat in the exhaust gas is utilized in the boiler for providing steam to drive a steam turbine, thus increasing the thermal efficiency of the plant.

### BRIEF DESCRIPTION OF THE DRAWINGS

In the following detailed part of the present description, the invention will be explained in more detail with reference to the exemplary embodiment of a gasification plant according to the invention shown in the drawing, in which

Figure 1 schematically shows a preferred embodiment of the gasification plant with combined engine and steam turbine, and

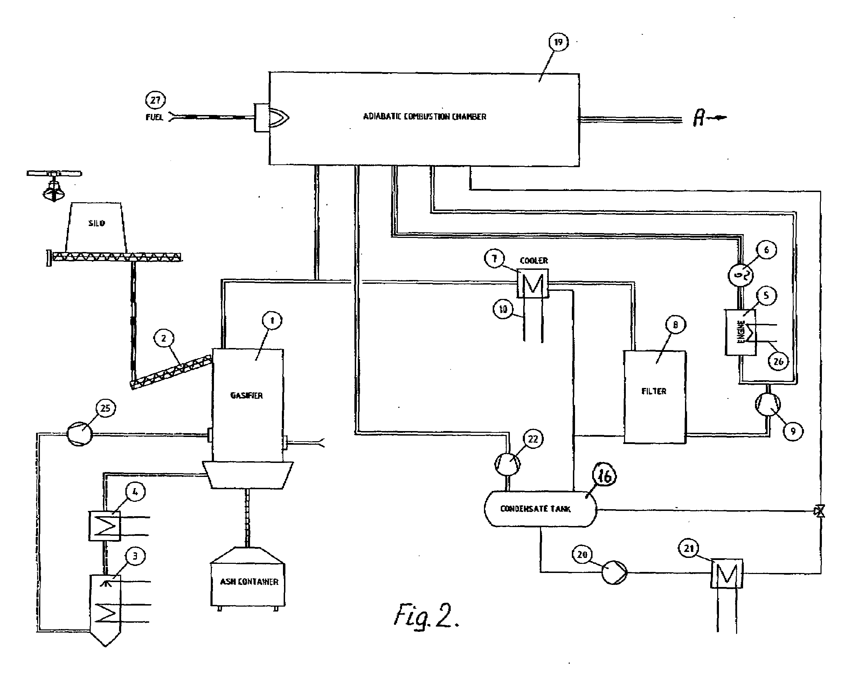

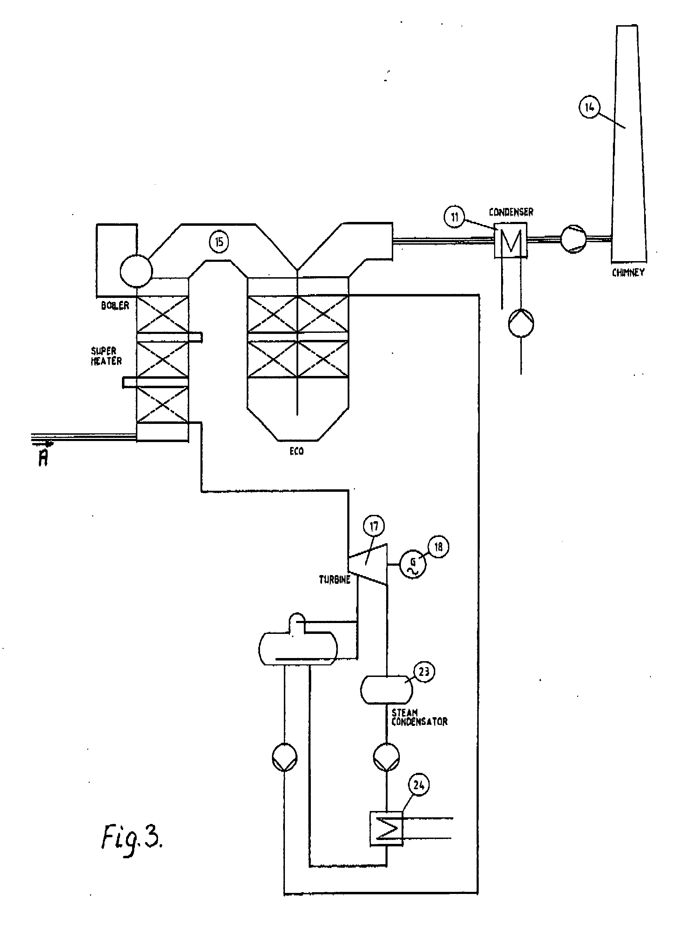

Figures 2 and 3 show parts of Figure 1 on a larger scale.

### DESCRIPTION OF THE PREFERRED EMBODIMENT

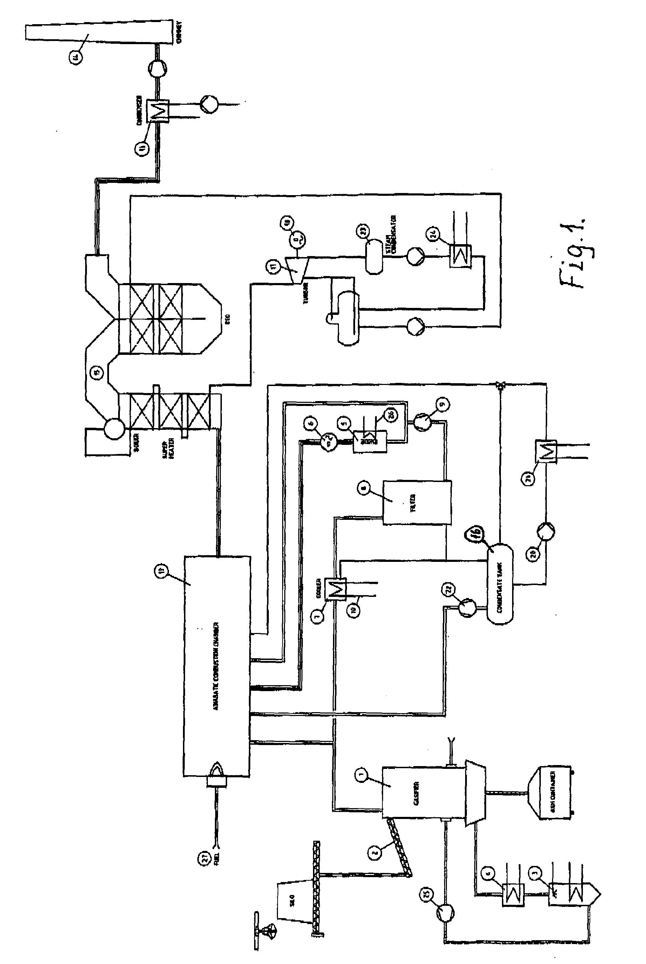

The apparatus for generating electric power shown in fig. 1 comprises a gasifier 1 of the shaft and updraft fixed bed type, in which raw material for gasification is charged from the top by means of a charging conveyor 2. Gasifying agent is introduced from the bottom of the gasifier 1 and the gasifying agent comprises humidified and preheated air delivered from a humidifier 3 and a preheater 4. Gasifying air is drawn through a jacket cooler on the gasifier reactor before it is delivered to the humidifier 3. The humidification 3 of the gasifying agent can take place with softened water or with condensate from the heat exchanger 11 after the economizer. The condensate pH must be adjusted before delivery to the humidifier unit. The heating of the gasifying agent may take place as an integrated part of the cooling system. The product gas produced in the gasifier 1 is delivered to a gas engine 5 driving a generator 6 for producing electrical power. Product gas cleaning equipment in the form of a product gas cooling system 7 and an electrostatic precipitator 8 is provided between the gasifier 1 and the gas engine 5 in order to provide a clean product gas for the gas engine 5. Furthermore, a fan 9 increases the pressure of the product gas delivered to the gas engine 5, said fan 9 being controlled to deliver a constant pressure and being followed by a product gas control valve varying the product gas flow for this purpose. The gas engine 5 may be a dual-fuel type engine, i.e. providing the possibility of supplying gaseous and liquid fuel to the engine. The product gas cooling system 7 is connected to a heat exchanger 10 in order to utilize the energy removed from the product gas in the product gas cooling system 7. The heat exchanger 10 may be integrated in the product gas cooling system 7 and the product gas cooling system 7 may comprise a further product gas cooling tower in order to reduce the temperature of the product gas and extract further condensate from the product gas. The cooling media could be part of an air-cooled, water-cooled or district heating system Condensate from the product gas cooling system 7 and the electrostatic precipitator 8 is taken out there from and led to the condensate tank 16. The electrostatic precipitator 8 removes possible further particles/aerosols present in the product gas before delivery to the gas engine 5. As an alternative to the electrostatic precipitator 8, a ceramic filter may be used.

In the condensate tank 16, gravity will separate the condensate into tar at the bottom and water at the top. The tar is taken out from the bottom of the condensate tank 16 and pumped by a pump 20 through a heat exchanger 21 and back into the condensate tank 16 or in the alternative to the combustion chamber 19, which is provided in the form of an adiabatic combustion chamber 19. The condensate water in the condensate tank 16 is brought to the boiling point and the steam is removed with a Roots blower 22, steam ejector or similar and blown into the adiabatic combustion chamber 19.

The exhaust gas from the gas engine 5 is led to the adiabatic combustion chamber 19, where the excess oxygen is used for the combustion of the evaporated condensate water and the tar. A long residence time, adequate temperature and high turbulence level in the adiabatic combustion chamber 19 ensure the complete combustion of the tar and will effectively reduce the content of CO and NOₓ in the exhaust gas from the gas engine 5. The flue gas from the adiabatic combustion chamber is led to the boiler 15 for generating superheated steam. Gaseous, solid or liquid fuel 27 may be supplied to the adiabatic combustion chamber 19 as support fuel or for start-up and shut-down of the plant. Furthermore, supplementary combustion air may be supplied to the adiabatic combustion chamber 19, possibly in the form of preheated atmospheric air.

The flue gas after the boiler 15 may be cooled further in a flue gas condenser 11 in order to extract more heat and possibly condensate water from the flue gas. After the flue gas condenser 11, the flue gas is led to the chimney 14.

The superheated steam generated by the boiler is led to the steam turbine 17, which is driving a generator 18 for generation of electrical power. The turbine can be a single, multi or reheat turbine. The steam cycle is based on a Rankine cycle. A steam engine could also be used. The turbine exhaust steam is condensed in a steam condenser 23, which is cooled by air, water or district heating water. The condensate is preheated in condensate heater 24 with waste heat from the gas engine 5, from the flue gas condenser 11, from the gas cooling system 7 or from the steam condensator 23. The generator for the gas engine and the steam turbine can be common.

During operation, the gas engine 5 and the generator 6 and the steam turbine 17 and the generator 18 are controlled to deliver the desired electrical power, and the fan 9 is controlled to deliver product gas to the gas engine 5 at a constant pressure. The tar in the condensate tank 16 has a heating value of around 30 MJ/kg and is used for controlling the desired steam production in the boiler and the temperature in the adiabatic combustion chamber 19. The water in condensate tank 16 is evaporated by the hot water when it enters the condensate tank 16. The tar level in the condensate tank 16 is controlled between a high and a low level. If the level is high, extra tar is led to the adiabatic combustion chamber 19 while the electrical power from the gas engine 5 and the generator 6 is reduced and correspondingly the steam flow from the steam boiler 15 is increased and thus the electrical power from the steam turbine 17 and the generator 1 is increased If the tar level in the condensate tank 16 is low, product gas may be bypassed the gas engine 5, either before or after cleaning thereof and led to the adiabatic combustion chamber. The cooling 26 of the gas engine 5 may be provided by an air cooler, a district heating system or by condensate from the steam cycle. Depending on the condensate flow, the turbine output may vary if controlled according to a certain level of condensate, light or heavy tar, in the tank 16 as an alternative control philosophy.

The control of the gasifier 1 is performed by means of the fan 25 for gasification air and is performed in such a way that the gasifier delivers product gas at the top of the gasifier 1 at a constant pressure, said pressure preferably being maintained close to the ambient atmospheric pressure, preferably at 0-50 Pa and more preferably at 0-10 Pa below the ambient atmospheric pressure.

The infeed of biomass by the charging conveyor 2 is controlled to maintain a substantially constant level of the biomass in the gasifier, e.g. by having a levelling impeller at the top of the gasifier distributing the biomass over the upper surface thereof, and controlling the charging in dependence of the resistance encountered by the levelling impeller. At the bottom of the gasifier 1 ashes are taken out and disposed of. The temperature of the product gas at the top of the gasifier is below 100°C, typically approx. 75°C.

Above, the invention has been described in connection with a preferred embodiment thereof, however, many modifications may be envisaged without departing from the following claims, such deviations among others including the use of more than one gas engine 5 and generator 6 for producing electrical power and possible connection between the gas engine 5 and the steam turbine 17 to drive the same generator 6, 18, and the above-mentioned possibility of delivering part of the product gas either directly from the gasifier or after product gas cleaning to the adiabatic combustion chamber 19. Furthermore, the condensate from the product gas cooling system 7 is tar and water which are separated in the condensate tank 16 or by e.g. an oil separator or centrifuge, and thus the separated tar may be delivered to other places than the adiabatic combustion chamber 19, such as to the gasifier 1 for use as raw material for the gasification, or possibly using the separated tar to be refined to a bio-diesel quality. Further heat exchangers may also be inserted after the heat exchanger 11 and between the product gas cooling system 7 and the electrostatic precipitator 8 in order to obtain a suitably low flue gas temperature in the stack 14 and at the electrostatic precipitator 8, respectively. The heat extracted in the several heat exchangers may be used for heating purposes in the plant as described above or used for district heating. As described above, the gasification medium is comprised of air and steam, however, this gasification medium may be supplemented with up to 50% recirculated flue gas or exhaust gas, which contains CO₂ and H₂O, which contribute to the Gasification process. Furthermore, evaporated water from the condensate tank 16 taken after the fan 22 may be included in the gasification medium delivered to the gasifier 1. The gasifier could also, dependent on the raw material to be gasified, be replaced by any of the following types of gasifiers: Fixed bed downdraft gasifiers, possibly with open-core or multistage, fired bed crossdraft gasifiers, fluid bed gasifiers of the bubbling bed type or circulating type, atmospheric pressure or pressusrized fluid bed gasifiers or entrained flow gasifiers.

Additionally, it will evidently be possible to heat the condensate in the condensate tank 16 directly in the condensate tank without the circulation of the tar through the heat exchanger 21.

The adiabatic combustion chamber 19 offers the possibility of providing a high quality burnout of the fuel therein, resulting in a low content of CO and TOC (total organic carbon), and furthermore the possibility of providing a "staging" of the combustion in order to achieve a low content of NOₓ in the flue gas.

## Claims

1. Gasification plant comprising
- gasifiers (1) delivering product gas to
- a gas engine (5) driving
- an electrical generator (6)
- a combustion chamber (19) delivering heat to
- a boiler (15) providing steam for driving
- a steam turbine (17) driving an electrical generator (18),
**characterized by**
- exhaust gas from said gas engine (5) being delivered to said combustion chamber (19) for use as combustion air.

2. Gasification plant in accordance with claim 1, **characterized by** comprising a product gas cooling (7) and cleaning (8) system between the gasifier (1) and the gas engine (5), said product gas cooling (7) and cleaning (8) system extracting water vapour, tar and particles from the product gas in the form of a condensate delivered to a condensate tank (16).

3. Gasification plant in accordance with claim 2, **characterized by** said condensate being delivered from said condensate tank (16) to said combustion chamber (19) for use as fuel.

4. Gasification plant in accordance with claim 3, **characterized by** said condensate being separated into a tar fraction for controlled delivery to the combustion chamber (19) and a vapour fraction evaporated by heating said condensate before controlled delivery thereof to the combustion chamber (19).

5. Gasification plant in accordance with any of the preceding claims, **characterized by** said gasifier (1) being of the shaft and updraft fixed bed type.

6. Gasification plant in accordance with any of the preceding claims, **characterized by** supplementary fuel (27) being delivered to said combustion chamber (19) in the form of cleaned or uncleaned product gas from the gasifier (1) and/or supplementary gaseous, solid or liquid fuel (27).

7. Gasification plant in accordance with claim 4, **characterized by** the heating of the condensate being provided by circulating (20) the bottom tar fraction from the condensate tank (16) through a heat exchanger (21) and back to the condensate tank (16).

8. Gasification plant in accordance with claim 7, **characterized by** the tar fraction delivered to the combustion chamber (19) being taken out immediately after the heat exchanger (21).

9. Gasification plant in accordance with any of the preceding claims, **characterized by** the combustion chamber (19) being provided as an adiabatic combustion chamber (19) from which the flue gases are fed into the boiler (15) to deliver heat to produce steam.

10. Gasification plant in accordance with any of the preceding claim **characterized by** heat for pre-heating (24) feed water for the boiler, for heating (21) the condensate in the condensate tank (16), for heating and superheating (4) the gasification medium for the gasifier and for evaporating water in the humidifier (3) for the gasification medium being delivered from the cooling (7) of the product gas, the cooling (26) of the gas engine (5), the cooling (11) of the flue gas after the boiler (15) and possibly the cooling (23) for condensing steam from the steam turbine, a possible surplus heat being delivered to a district heating system or a cooling tower.

11. Gasification plant in accordance with any of the preceding claims, **characterized by** the gas engine (5) and the steam turbine (17) being mutually connected to drive a common electrical generator (6, 18).

12. Gasification plant in accordance with any of the preceding claims, **characterized by** the gasification medium being preheated by passing through a jacket cooler on the gasifiers (1).
